# EUROPÄISCHE PATENTSCHRIFT

(11) **EP 3 614 374 B1**
(45) Veröffentlichungstag und Bekanntmachung des Hinweises auf die Patenterteilung: **07.06.2023**
(21) Anmeldenummer: 19190730.2
(22) Anmeldetag: 08.08.2019
(51) Int. Cl.: G10K 11/178, B60N 2/879, B60N 2/00

(54) **GERÄUSCHREDUZIERUNGSSYSTEM UND VERFAHREN ZUR AKTIVEN KOMPENSATION VON STÖRGERÄUSCHEN**
NOISE REDUCTION SYSTEM AND METHOD FOR ACTIVE COMPENSATION OF NOISE
SYSTÈME DE RÉDUCTION DE BRUIT ET PROCÉDÉ DE COMPENSATION ACTIVE DU BRUIT PARASITES

(30) Priorität: 22.08.2018 DE 102018120503
(43) Veröffentlichungstag der Anmeldung: 26.02.2020
(73) Patentinhaber: recalm GmbH, 21079 Hamburg (DE)
(72) Erfinder: VON ELLING, Marc, 22769 Hamburg (DE); GÜNTHER, Martin, 25348 Glückstadt (DE); KASIMIR, André, 22307 Hamburg (DE)
(74) Vertreter: Seemann & Partner Patentanwälte mbB

(56) Entgegenhaltungen:
- US-A1- 2001 003 168
- US-A1- 2002 076 059
- US-A1- 2002 140 215
- US-A1- 2009 274 320
- US-A1- 2016 027 428
- US-A1- 2016 329 040

## Beschreibung

Die Erfindung betrifft ein Geräuschreduzierungssystem zur aktiven Kompensation von Störgeräuschen in einem Personenbeförderungsbereich eines Fahrzeugs, umfassend eine Steuereinheit, zumindest ein Mikrofon zum Erfassen eines Störgeräuschs, zumindest einen Schallerzeuger zum Erzeugen eines Antischall-Geräuschs und eine Positionserfassungseinheit zum Erfassen einer Position und/oder Orientierung des Kopfs eines Benutzers in dem Personenbeförderungsbereich, wobei die Steuereinheit
- eingangsseitig mit dem Mikrofon gekoppelt und zum Empfang eines Störgeräusch-Signals eingerichtet ist,
- eingangsseitig mit der Positionserfassungseinheit gekoppelt, zum Empfang von Positionsdaten und zur Bestimmung eines Positionssignals aus den Positionsdaten eingerichtet ist, wobei das Positionssignal die Position und/oder Orientierung des Kopfs des Benutzers relativ zu der Positionserfassungseinheit kennzeichnet,
- dazu eingerichtet ist, aus dem Störgeräusch-Signal und dem Positionssignal ein Antischall-Signal zu erzeugen,
- ausgangsseitig mit dem Schallerzeuger gekoppelt und zum Bereitstellen des Antischall-Signals eingerichtet ist,
wobei der Schallerzeuger dazu eingerichtet ist, aus dem Antischall-Signal ein Antischall-Geräusch zu erzeugen, so dass durch Überlagerung des zu dem Störgeräusch gegenphasigen Antischall-Geräuschs in einer innerhalb des Personenbeförderungsbereichs liegenden Ruhezone eine aktive Reduzierung des Störgeräuschs bewirkt werden kann.

Ferner betrifft die Erfindung ein Verfahren zur aktiven Kompensation von Störgeräuschen in einem Personenbeförderungsbereich eines Fahrzeugs, bei dem mit zumindest einem Mikrofon ein Störgeräusch erfasst und das Störgeräusch von dem Mikrofon in ein Störgeräusch-Signal umgewandelt wird, mit einer Positionserfassungseinheit Positionsdaten erfasst und aus den Positionsdaten ein Positionssignal bestimmt wird, welches eine Position und/oder Orientierung des Kopfs eines Benutzers in dem Personenbeförderungsbereich relativ zu der Positionserfassungseinheit kennzeichnet, aus dem Störgeräusch-Signal und dem Positionssignal ein Antischall-Signal erzeugt wird, mit einem Schallerzeuger aus dem Antischall-Signal ein Antischall-Geräusch erzeugt wird und das Antischall-Geräusch in einer innerhalb des Personenbeförderungsbereichs liegenden Ruhezone mit dem Störgeräusch gegenphasig überlagert wird, so dass in der Ruhezone eine aktive Reduzierung des Störgeräuschs bewirkt wird.

Geräuschreduzierungssysteme sind in verschiedenen Ausführungen bekannt. Geräuschreduzierungssysteme werden auch als Geräuschunterdrückungssysteme, Störgeräuschunterdrückungssysteme, Störgeräuschreduzierungssysteme oder auch Noise-Cancelling-Systeme bezeichnet. Es wird zwischen aktiven und passiven Systemen unterschieden. Bei einem passiven System kommen schallabsorbierende Materialien zum Einsatz, um die unerwünschten Störgeräusche zu verringern. Bei aktiven Geräuschreduzierungssystemen, die auch als Active-Noise-Cancelling- bzw. Active-Noise-Control-Systeme (vielfach abgekürzt als ANC) bezeichnet werden, kommt eine aktive Lärmkompensation mit Antischall (auch als Gegenschall bezeichnet) zum Einsatz. Ein Antischallgeräusch wird mit dem unerwünschten Störgeräusch überlagert, so dass in einer Ruhezone durch destruktive Interferenz das Störgeräusch verringert oder ausgelöscht wird. Im Kontext der vorliegenden Beschreibung werden nur aktive Geräuschreduzierungssysteme erläutert, auch wenn diese nicht explizit als aktive Geräuschreduzierungssysteme sondern lediglich als Geräuschreduzierungssysteme bezeichnet werden.

Mit einem aktiven Geräuschreduzierungssystem kann eine effiziente Unterdrückung des Störgeräuschs lediglich in einem begrenzten Raumbereich erreicht werden. Nur in dieser Ruhezone überlagern sich das Störgeräusch und das Antischallgeräusch ausreichend genau gegenphasig, so dass eine effiziente Unterdrückung des Störgeräuschs stattfindet. Diese räumliche Begrenzung des Bereichs, in dem eine effiziente Geräuschreduzierung erreicht werden kann, führt dazu, dass Geräuschreduzierungssysteme sehr empfindlich gegenüber Bewegungen des Kopfs eines Benutzers sind. Sobald infolge einer geringen Kopfbewegung oder Drehung des Kopfs der Eingang des Gehörgangs nicht mehr in der Ruhezone liegt, in der eine effiziente Geräuschunterdrückung stattfindet, verlieren die Geräuschreduzierungssysteme schnell ihre Wirksamkeit.

Aus DE 100 36 435 C1 ist ein Geräuschreduzierungssystem bekannt, bei dem eine räumliche Position oder Ausrichtung des Kopfs eines Hörers mithilfe eines Sensors erfasst wird. Eine mit dem Sensor gekoppelte Steuereinheit ist dazu eingerichtet, das Antischall-Signal in Abhängigkeit von der Position oder Ausrichtung des Hörers zu erzeugen. Als Sensor zur Erfassung der räumlichen Position des Kopfs ist ein optischer Sensor vorgesehen, der seitlich in einem Dachholm eines Fahrzeugs montiert ist. Das von dem optischen Sensor erfasste Bild wird ausgewertet und die Position sowie die Ausrichtung des Kopfs wird berechnet.

Ein weiteres Geräuschreduzierungssystem ist aus DE 10 2013 202 810 A1 bekannt. Dieses System umfasst eine in einer Kopfstütze eines Sitzes eines Kraftfahrzeugs angeordnete Positionserfassungseinheit zum Erfassen eines für die Störgeräuschunterdrückung maßgeblichen Körperteils eines Benutzers des Kraftfahrzeugs, also von dessen Ohren. Ein vor der Kopfstütze befindlicher Bereich des Innenraums des Kraftfahrzeugs ist in mehrere räumlich Segmente aufgeteilt. In Abhängigkeit von der ermittelten Position der Ohren des Benutzers wird die Störgeräuschunterdrückung für dasjenige Segment optimiert, in welchem sich die Ohren des Benutzers befinden. Diese Quantelung des Raums verringert die erforderliche Rechenleistung, da zur Berechnung des Antischall-Signals keine Berechnung in direkter Abhängigkeit von einer ermittelten Position der Ohren des Benutzers erfolgt. Die Berechnung erfolgt dynamisch für das eine oder andere ausgewählte Segment des Innenraums, für die die zugehörigen Übertragungsfunktionen zuvor bestimmt wurden. Die Positionserfassung des Kopfs des Benutzers erfolgt mittels mehrerer Ultraschallsensoren.

Die dynamische Anpassung der Geräuschreduzierung erfolgt durch eine Verlagerung eines virtuellen Mikrofons, welches das Fehler- oder Störgeräusch aufnimmt. Es wird rechnerisch in denjenigen Bereich verschoben, in dem die aktive Geräuschdämpfung stattfinden soll. Diese Technik ist beispielsweise in US 5,701,350 oder in US 5,381,485 beschrieben.

US 2016/0329040 A1 offenbart eine Vorrichtung zur aktiven Geräuschreduzierung. Diese umfasst ein Lautsprecherpaar, welches zu beiden Seiten eines Kopfstützen-Bereichs angeordnet ist. In diesem Kopfstützen-Bereich können sich Mikrofone befinden, die ein Umgebungsgeräusch erfassen. Mittels der Lautsprecher wird ein Gegenschallsignal ausgegeben. Zur Anpassung des Bereichs, in dem die Geräuschreduzierung stattfinden soll, wird eine Kopfposition eines Nutzers bestimmt. Hierzu wird beispielsweise eine 3D-Kamera eingesetzt.

Aus der US 2009/0274320 A1 ist eine weitere Vorrichtung zur Geräuschreduzierung mittels Gegenschall bekannt. Neben einem ersten Lautsprecher, der ein erstes Signal mit gegenüber einem zu unterdrückenden Geräusch in invertierter Phase ausgibt, umfasst die Vorrichtung einen zweiten Lautsprecher, der das Geräusch in nichtinvertierter Phase wiedergibt. Dadurch wird es ermöglicht, die Geräuschunterdrückung an einem Punkt zu messen, der nicht dem Ort des Benutzers entspricht.

US 2002/0140215 A1 zeigt ein System, mit dem die Besetzung eines Fahrzeugs detektiert werden kann. Zu diesem Zweck werden an einer zu detektierenden Person vorhandene RFID-Tags oder akustische Oberflächenwellen-Einheiten eingesetzt.

US 2002/076059 A1 zeigt ein Geräuschreduzierungssystem, dessen Komponenten in einer Kopfstütze angeordnet sind. Das System umfasst zwei Positionserfassungseinheiten, bei denen es sich um Videokameras handeln kann, die an den jeweils äußeren Enden der Kopfstütze angeordnet sind.

US 2001/003168 A1 offenbart ein neuronales Netzwerk zur Bildauswertung.

US 2006/027428 A1 offenbart ein Geräuschreduzierungssystem, welches in den Sitz eines Flugzeugs integriert ist.

Es ist eine Aufgabe der Erfindung, ein Geräuschreduzierungssystem anzugeben, das einen einfachen Ein- und Umbau sowie eine einfache Umrüstung erlaubt und/oder einfach nachgerüstet werden kann.

Die Aufgabe wird gelöst durch ein Geräuschreduzierungssystem zur aktiven Kompensation von Störgeräuschen in einem Personenbeförderungsbereich eines Fahrzeugs, umfassend eine Steuereinheit, zumindest ein Mikrofon zum Erfassen eines Störgeräuschs, zumindest einen Schallerzeuger zum Erzeugen eines Antischall-Geräuschs und eine Positionserfassungseinheit zum Erfassen einer Position und/oder Orientierung des Kopfs eines Benutzers in dem Personenbeförderungsbereich, wobei die Steuereinheit
- eingangsseitig mit dem Mikrofon gekoppelt und zum Empfang eines Störgeräusch-Signals eingerichtet ist,
- eingangsseitig mit der Positionserfassungseinheit gekoppelt, zum Empfang von Positionsdaten und zur Bestimmung eines Positionssignals aus den Positionsdaten eingerichtet ist, wobei das Positionssignal die Position und/oder Orientierung des Kopfs des Benutzers relativ zu der Positionserfassungseinheit kennzeichnet,
- dazu eingerichtet ist, aus dem Störgeräusch-Signal und dem Positionssignal ein Antischall-Signal zu erzeugen,
- ausgangsseitig mit dem Schallerzeuger gekoppelt und zum Bereitstellen des Antischall-Signals eingerichtet ist,
wobei der Schallerzeuger dazu eingerichtet ist, aus dem Antischall-Signal ein Antischall-Geräusch zu erzeugen, so dass durch Überlagerung des zu dem Störgeräusch gegenphasigen Antischall-Geräuschs in einer innerhalb des Personenbeförderungsbereichs liegenden Ruhezone eine aktive Reduzierung des Störgeräuschs bewirkt werden kann, wobei das Geräuschreduzierungssystem dadurch fortgebildet ist, dass die Positionserfassungseinheit eine 3D-Kameraanordnung ist, wobei das Geräuschreduzierungssystem dadurch fortgebildet ist, dass die 3D-Kameraanordnung gemeinsam mit dem zumindest einen Mikrofon, dem zumindest einen Schallerzeuger und der Steuereinheit eine räumlich abgeschlossene bauliche Einheit bilden, wobei die 3D-Kameraanordnung zumindest eine erste und eine zweite Kamera umfasst und eine Stereobasis zwischen der ersten und der zweiten Kamera von oben nach unten verläuft.

Mit einer 3D-Kameraanordnung ist eine genaue Erfassung einer Position des Kopfs des Benutzers möglich. Es ist erkannt worden, dass diese Form der Positionserfassung herkömmlichen Ansätzen überlegen ist. So ist es beispielsweise möglich, anhand der Kopfform, ohne dass das Ohr oder die Ohren des Benutzers als solches sichtbar ist/sind, sehr genau auf die Lage des Ohrs/der Ohren des Benutzers zu schließen. Nur bei der 3D-Erfassung kann der Punkt am Kopf des Benutzers, an welchem der Gehörgang austritt, sehr genau bestimmt werden, ohne dass das Ohr selbst erfasst werden muss. Dabei ist es ausreichend, die Position eines einzigen Ohrs des Benutzers zu erfassen. Ausgehend von dieser Position kann unter Kenntnis der ebenfalls erfassten Kopfgeometrie, Neigung und Position des Kopfs des Benutzers, auf die Lage des gegenüberliegenden Ohrs geschlossen werden.

Anhand der Ohrposition wird die Ruhezone aktiv den Kopfbewegungen des Benutzers nachgeführt, so dass bei Anwendung der aktiven Geräuschreduzierung im Freifeld eine sehr gute Geräuschdämpfung erreicht werden kann.

Das Geräuschreduzierungssystem umfasst beispielsweise zwei Schallerzeuger. Bei den Schallerzeugern handelt es sich beispielsweise um Lautsprecher. Diese sind ferner beispielsweise beidseitig des Kopfs des Benutzers angeordnet. Die 3D-Kameraanordnung, welche auch als Stereokamera bezeichnet wird, umfasst zwei einzelne Kameras.

Bei dem Kraftfahrzeug handelt es sich beispielsweise um einen Pkw, einen Lkw, ein Nutzfahrzeug, beispielsweise um eine Baumaschine oder eine Landmaschine. Vor allem bei Baumaschinen ist der Einsatz des Geräuschreduzierungssystems besonders vorteilhaft, da diese Fahrzeuge auch im Personenbeförderungsbereich hohe Betriebsgeräusche zeigen.

Die 3D-Kameraanordnung bildet gemeinsam mit dem zumindest einen Mikrofon, dem zumindest einen Schallerzeuger und der Steuereinheit eine räumlich abgeschlossene bauliche Einheit.

Die Anordnung der vorgenannten funktionellen Einheiten in einer abgeschlossenen baulichen Einheit erlaubt es, das Geräuschreduzierungssystem als Ersatz- oder Aufrüstteil anzubieten, wobei an dem Fahrzeug praktisch keine Erweiterungen oder Umbauten vorgesehen werden müssen. Dies ist ein großer Vorteil gegenüber vorhandenen Systemen, welche eine tiefe Integration in das Fahrzeug verlangen. Das Geräuschreduzierungssystem erfordert dies vorteilhaft nicht und ist daher besonders für den Sekundärmarkt geeignet.

Beispielsweise ist die räumlich abgeschlossene bauliche Einheit eine Kopfstütze eines Fahrzeugs. In diesem Fall ist es möglich, einfach die vorhandene Kopfstütze durch eine Kopfstütze zu ersetzen, in welche das Geräuschreduzierungssystem integriert ist. Ein solcher Austausch geht einfach und schnell vonstatten.

Gemäß einer weiteren vorteilhaften Ausführungsform ist das Geräuschreduzierungssystem dadurch fortgebildet, dass die Einheit Befestigungsmittel umfasst, so dass die Einheit an eine Kopfstütze eines Kraftfahrzeugs montierbar ist.

Ein solches Geräuschreduzierungssystem erlaubt die Nachrüstung sogar ohne dass die Kopfstütze des Fahrzeugs ausgetauscht werden muss.

Ferner ist insbesondere vorgesehen, dass die Einheit die Kopfstütze in horizontaler Richtung beidseitig überragt oder die Einheit die Kopfstütze in vertikaler Richtung überragt. In den die Kopfstütze überragenden Abschnitten ist zumindest die 3D-Kameraanordnung und optional auch zumindest ein Schallerzeuger angeordnet.

Wenn die zuvor genannten Einheiten eine räumlich abgeschlossene bauliche Einheit bilden ist dies ferner vorteilhaft, da werkseitig die räumliche Beziehung zwischen Schallerzeuger und 3D-Kameraanordnung bestimmt werden kann und dann festgelegt ist. Diese räumliche Beziehung ist wichtig, da mit der 3D-Kameraanordnung die Position des Ohrs des Benutzers erfasst wird und abhängig von dieser Position mittels der Schallerzeuger das Antischallgeräusch für die betreffende Position ausgegeben wird, so dass die Ruhezone stets am Ohr des Benutzers liegt. Bei Systemen, bei denen die Positionserfassungseinheit und der Schallerzeuger voneinander räumlich entkoppelt sind, ist es stets erforderlich, um den beschriebenen Effekt in ausreichender Genauigkeit zu erreichen, das System exakt einzumessen. Dies kann bei dem Geräuschreduzierungssystem gemäß der vorgenannten Ausführungsform vorteilhaft entfallen. Es ist also tatsächlich lediglich erforderlich, beispielsweise die Kopfstütze eines Kraftfahrzeugs durch eine Kopfstütze, in die ein Geräuschreduzierungssystem integriert ist, auszutauschen. Gleiches gilt für das Hinzufügen eines Geräuschreduzierungssystems, welches an die Kopfstütze montierbar ist.

Die 3D-Kameraanordnung umfasst zumindest eine erste und eine zweite Kamera, wobei eine Stereobasis zwischen der ersten und der zweiten Kamera von oben nach unten verläuft und insbesondere vertikal orientiert ist.

Im Kontext der vorliegenden Beschreibung bedeutet "vertikal", dass diese Richtung aufrecht oder senkrecht in Bezug auf eine gewöhnliche Sitzposition des Benutzers verläuft. Steht das Fahrzeug absolut gerade, so entspricht diese vertikale Richtung der Schwerkraftrichtung.

Die Stereobasis zwischen der ersten und der zweiten Kamera verläuft von oben nach unten. Dies bedeutet, dass die erste Kamera höher als die zweite Kamera angebracht ist. In diesem Fall ist keine exakt vertikale Ausrichtung der Stereobasis gefordert.

Die Ausrichtung der Stereobasis in den beschriebenen Richtungen hat sich als vorteilhaft für eine effiziente und genaue Erfassung der Kopfposition des Benutzers herausgestellt.

Es ist ferner insbesondere vorgesehen, dass die Blickachsen der ersten und der zweiten Kamera nicht parallel zueinander ausgerichtet sind, was auch vorgesehen sein kann, sondern dass diese um einen Winkel, der zwischen 0° und 30° beträgt, einander zugeneigt sind.

Es ist ferner beispielsweise vorgesehen, dass mehr als eine 3D-Kameraanordnung umfasst ist. Beispielsweise können zwei 3D-Kameraanordnungen umfasst sein, von denen jeweils eine 3D-Kameraanordnung zur linken und eine zur rechten Seite des Kopfs des Benutzers vorgesehen sind.

Ferner ist gemäß einer weiteren Ausführungsform vorgesehen, dass mehrere Mikrofone zum Erfassen des Störgeräuschs umfasst sind, wobei insbesondere vier Mikrofone pro Ruhezone umfasst sind.

Mithilfe mehrerer Mikrofone lässt sich eine Position eines sog. virtuellen Mikrofons im Raum bestimmen. Mit dem virtuellen Mikrofon wird das Störgeräusch am Ort des Ohrs des Benutzers bestimmt, und das Antischall-Signal wird entsprechend berechnet. Vier Mikrofone haben sich als guter Kompromiss zwischen genauer Positionierbarkeit des virtuellen Mikrofons einerseits und Rechenaufwand andererseits herausgestellt. Es können je vier Mikrofone pro Ruhezone, also insgesamt acht Mikrofone, vorgesehen sein. Ebenso ist es möglich insgesamt vier Mikrofone vorzusehen, die für beide Ruhezonen eingesetzt werden.

Im Kontext der vorliegenden Beschreibung werden als Mikrofone stets die Fehlermikrofone bezeichnet. Je nachdem, ob es sich bei dem Geräuschreduzierungssystem um ein Feedforward-System (mit Referenzsensor) oder um ein Feedback-System (ohne Referenzsensor) handelt, umfasst dieses zusätzlich zu den Fehlermikrofonen zusätzlich noch einen Referenzsensor, der das Störgeräusch direkt misst. Der Referenzsensor kann ebenfalls ein Mikrofon aber auch beispielsweise ein Beschleunigungssensor sein.

Gemäß einer weiteren vorteilhaften Ausführungsform ist das Geräuschreduzierungssystem dadurch fortgebildet, dass die Steuereinheit ein neuronales Netzwerk umfasst, welches dazu eingerichtet ist, einen Bilddatenstrom der 3D-Kameraanordnung als Positionsdaten zu empfangen und das Positionssignal, welches die Position und/oder Orientierung des Kopfs des Benutzers relativ zu der Positionserfassungseinheit kennzeichnet, zu bestimmen und auszugeben.

Mithilfe eines neuronalen Netzwerks können der Bilddatenstrom der 3D-Kameraanordnung schnell und effizient ausgewertet werden. Außerdem kann das neuronale Netz mithilfe eines Trainingsdatensatzes darauf trainiert werden, die Position des Ohrs am Kopf eines Benutzers genau zu erfassen, ohne dass das Ohr tatsächlich in den Bilddaten sichtbar ist.

Gemäß einer weiteren Ausführungsform ist vorgesehen, dass die Steuereinheit ein FPGA umfasst und insbesondere das neuronale Netzwerk in dem FPGA implementiert ist. Die für die aktive Kompensation der Störgeräusche erforderlichen Berechnungen finden in dem FPGA statt. Hierzu zählen insbesondere die Berechnung des Gegenschallsignals und die Berechnung der Position und/oder Orientierung des Kopfs des Benutzers, aus der eine Position für dessen linkes und rechtes Ohr berechnet wird.

Ein FPGA erlaubt parallele Rechenoperationen. Die für die aktive Kompensation von Störgeräuschen erforderlichen Berechnungen können simultan und in Echtzeit durchgeführt werden. Im Gegensatz zu einem FPGA gelangen sequentielle Prozessorarchitekturen (DSP, CPU) bei solchen Aufgaben schnell an ihre Grenzen, da das Echtzeitraster nicht mehr eingehalten werden kann. Sequentielle Prozessorarchitekturen bieten bei Verwendung eines Betriebssystems die Option zum Multi Threading. Damit kann aber keine deterministische Zykluszeit gewährleistet werden. Ein FPGA bietet diese Möglichkeit, was bedeutet, dass der FPGA stets nach einer bekannten und vorgegebenen Taktzeit die erforderlichen Berechnung abgeschlossen hat. Dies ist für den vorliegenden Anwendungsfall besonders vorteilhaft.

Die Aufgabe wird ferner gelöst durch ein Verfahren zur aktiven Kompensation von Störgeräuschen in einem Personenbeförderungsbereich eines Fahrzeugs, bei dem mit zumindest einem Mikrofon ein Störgeräusch erfasst und das Störgeräusch von dem Mikrofon in ein Störgeräusch-Signal umgewandelt wird, mit einer Positionserfassungseinheit Positionsdaten erfasst und aus den Positionsdaten ein Positionssignal bestimmt wird, welches eine Position und/oder Orientierung des Kopfs eines Benutzers in dem Personenbeförderungsbereich relativ zu der Positionserfassungseinheit kennzeichnet, aus dem Störgeräusch-Signal und dem Positionssignal ein Antischall-Signal erzeugt wird, mit einem Schallerzeuger aus dem Antischall-Signal ein Antischall-Geräusch erzeugt wird und das Antischall-Geräusch in einer innerhalb des Personenbeförderungsbereichs liegenden Ruhezone mit dem Störgeräusch gegenphasig überlagert wird, so dass in der Ruhezone eine aktive Reduzierung des Störgeräuschs bewirkt wird, wobei das Verfahren dadurch fortgebildet ist, dass die Positionserfassungseinheit eine 3D-Kameraanordnung ist und ein 3D-Bilddatenstrom erzeugt wird, wobei das Verfahren dadurch fortgebildet ist, dass der 3D-Bilddatenstrom in ein neuronales Netz eingespeist wird und das neuronale Netz aus dem 3D-Bilddatenstrom das Positionssignal, welches die Position und/oder Orientierung des Kopfs des Benutzers relativ zu der Positionserfassungseinheit kennzeichnet, erzeugt und ausgibt.

Auf das Verfahren treffen gleiche oder ähnliche Vorteile zu, wie sie bereits im Hinblick auf das Geräuschreduzierungssystem selbst erwähnt wurden, so dass auf Wiederholungen verzichtet werden soll.

Die Positionsdaten werden in ein neuronales Netz eingespeist und das neuronale Netz erzeugt aus den Positionsdaten das Positionssignal, welches die Position und/oder Orientierung des Kopfs des Benutzers relativ zu der Positionserfassungseinheit kennzeichnet, und gibt diese aus.

Vorteilhaft ist zwischen den zuvor genannten Einheiten, nämlich der 3D-Kameraanordnung, dem zumindest einen Mikrofon und dem Schallerzeuger ein festes Referenzsystem vorhanden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Geräuschreduzierungssystem in schematisch vereinfachter perspektivischer Darstellung,
- Fig. 2: ein weiteres Geräuschreduzierungssystem in schematisch vereinfachter perspektivischer Darstellung,
- Fig. 3: dieses in eine Kopfstütze integrierte Geräuschreduzierungssystem in einer weiteren schematisch vereinfachten perspektivischen Darstellung,
- Fig. 4: ein an eine Kopfstütze montierbares Geräuschreduzierungssystem in schematisch vereinfachter Frontalansicht und
- Fig. 5: dieses Geräuschreduzierungssystem in schematisch vereinfachter perspektivischer Darstellung.

In den Zeichnungen sind jeweils gleiche oder gleichartige Elemente und/oder Teile mit denselben Bezugsziffern versehen, so dass von einer erneuten Vorstellung jeweils abgesehen wird.

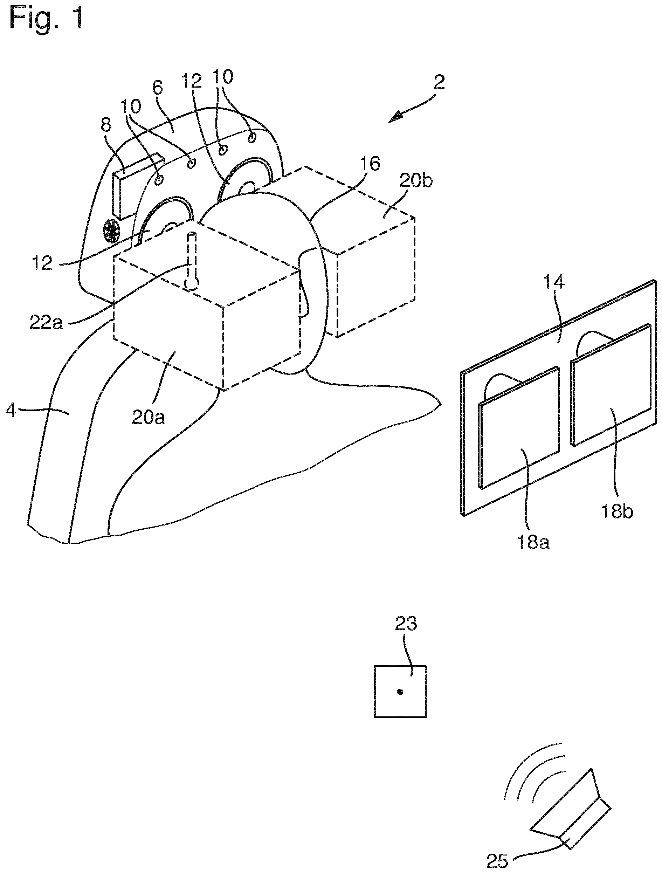

Fig. 1 zeigt ein Geräuschreduzierungssystem 2 zur aktiven Kompensation von Störgeräuschen. Das Geräuschreduzierungssystem 2 ist in einem Personenbeförderungsbereich eines Fahrzeugs montiert, welches als solches nicht dargestellt ist. Von dem Fahrzeug ist lediglich schematisch und vereinfacht ein Teil eines Fahrersitzes 4 mit einer daran angebrachten Kopfstütze 6 dargestellt. Das Fahrzeug ist beispielsweise ein Pkw, ein Lkw oder ein anderes Nutzfahrzeug. Beispielsweise handelt es sich bei dem Fahrzeug um eine Baumaschine oder eine Landmaschine.

Das Geräuschreduzierungssystem 2 umfasst eine Steuereinheit 8 sowie mehrere Mikrofone 10. Beispielhaft ist ein Geräuschreduzierungssystem 2 dargestellt, welches acht Mikrofone 10 umfasst. Die Mikrofone 10 sind am oberen und unteren Rand der Kopfstütze 6 angeordnet und in diese integriert. Von den acht Mikrofonen 10 sind die am unteren Rand der Kopfstütze 6 vorhandenen Mikrofone 10 verdeckt, es sind nur die am oberen Rand der Kopfstütze 6 vorhandenen Mikrofone 10 sichtbar. Die Mikrofone 10 dienen der Erfassung eines Störgeräuschs.

Das Störgeräusch wird von einer Lärmquelle 25 abgegeben. Zwischen der Lärmquelle 25 und den Mikrofonen 10 befindet sich ein Referenzsensor 23, bei dem es sich ebenfalls um ein Mikrofon handeln kann. Der Referenzsensor 23 ist optional vorgesehen. Er ist erforderlich oder nicht, je nachdem, ob es sich bei dem Geräuschreduzierungssystem 2 um ein Feedforward-System (mit Referenzsensor 23) oder um ein Feedback-System (ohne Referenzsensor 23) handelt. Anstatt eines Mikrofons als Referenzsensor 23, welches das von der Lärmquelle 25 abgegebene Störgeräusch direkt misst, kann beispielsweise auch ein Beschleunigungssensor vorgesehen sein. Ebenso kann eine Motordrehzahl oder ein anderer geeigneter Parameter in das System eingespeist werden. Anhand der Daten des Beschleunigungssensors, der Motordrehzahl oder eines anderen Parameters kann auf der Grundlage eines Modells auf die Störgeräuschkulisse des Fahrzeugs geschlossen werden. Diese dient anstatt der von einem als Referenzsensor 23 eingesetzten Mikrofon erfassten Störgeräusche als Grundlage für die Berechnung des Antischall-Signals. Der Referenzsensor 23 koppelt sein Signal eingangsseitig in die Steuereinheit 8 ein. Bei einem Feedback-System kann auf den Referenzsensor 23 verzichtet werden.

Ferner umfasst das Geräuschreduzierungssystem 2 zumindest einen Schallerzeuger 12. Dargestellt ist ein System, welches zwei Schallerzeuger 12 umfasst, bei denen es sich beispielhaft um Lautsprecher handelt. Die Schallerzeuger dienen zum Erzeugen eines Antischallgeräuschs. Ferner umfasst das Geräuschreduzierungssystem 2 eine Positionserfassungseinheit zum Erfassen einer Position und/oder Orientierung des Kopfs 16 eines schematisch angedeuteten Benutzers. Die Positionserfassungseinheit ist ein 3D-Kamerasystemen 14. Der Benutzer, bei dem es sich beispielsweise um den Fahrer des Fahrzeugs handelt, befindet sich in einem Personenbeförderungsbereich des Fahrzeugs.

Die Steuereinheit 8 ist eingangsseitig mit den acht Mikrofonen 10 gekoppelt. Die Mikrofone 10 erfassen das Störgeräusch, wandeln dieses in ein Störgeräusch-Signal um und koppeln dieses eingangsseitig in die Steuereinheit 8 ein. Mithilfe der Mehrzahl von Mikrofonen 10 ist es möglich, sowohl für das rechte als auch für das linke Ohr des Benutzers einen virtuellen Sensor bereitzustellen, so dass am jeweiligen Ohr des Benutzers eine effiziente Geräuschreduzierung bereitgestellt werden kann.

Hierzu ist es jedoch erforderlich, dass das Geräuschreduzierungssystem 2 die Position der Ohren des Benutzers, genauer die Position des Gehörgang-Ausgangs, genau kennt. Hierzu umfasst das Geräuschreduzierungssystem 2 die Positionserfassungseinheit. Diese erzeugt Positionsdaten in Form von einem 3D-Bilddatenstrom. Die 3D-Kameraanordnung 14 umfasst eine erste Kamera 18a und eine zweite Kamera 18b. Die Positionsdaten werden in der Verarbeitungseinheit 8 in ein Positionssignal umgerechnet, welches die Position und/oder Orientierung des Kopfs 16 des Benutzers relativ zu der 3D-Kameraanordnung 14 kennzeichnet. Es ist also mit anderen Worten die Position und/oder Orientierung des Kopfs 16 des Benutzers relativ zu der 3D-Kameraanordnung 14 bekannt. Da die 3D-Kameraanordnung 14 fest im Fahrzeug installiert ist, kann die räumliche Beziehung zwischen den Schallerzeugern 12 und der 3D-Kameraanordnung 14 eingemessen werden, so dass die Steuereinheit 8 in der Lage ist, ein Antischall-Signal aus dem Störgeräusch und dem Positionssignal zu errechnen. Hierzu wird die Lages eines virtuellen Mikrofons 22a berechnet, welches zumindest in der Nähe des Gehörgang-Eingangs des Benutzers liegt.

Die Verarbeitungseinheit 8 stellt das Antischall-Signal ausgangsseitig bereit. Dabei wird das Antischall-Signal je nachdem, ob es sich bei dem Geräuschreduzierungssystem 2 um ein Feedforward-System (mit Referenzsensor 23) oder um ein Feedback-System (ohne Referenzsensor 23) handelt aus den Daten des Referenzsensors 23 oder aus den von den Mikrofonen 10 erfassten Daten berechnet.

Die Schallerzeuger 12 sind dazu eingerichtet, aus dem Antischall-Signal ein Antischall-Geräusch zu erzeugen, welches innerhalb der rechten und linken Ruhezone 20a, 20b mit dem Störgeräusch überlagert wird, so dass sich eine aktive Reduzierung des Störgeräuschs ergibt.

Bewegt der Benutzer seinen Kopf, so wird diese Bewegung von der Positionserfassungseinheit 14 erfasst und die Ruhezonen 20a, 20b werden mitgeführt. So ist es möglich, eine effiziente aktive Geräuschdämmung beispielsweise in einem Nutzfahrzeug, insbesondere in einer Baumaschine oder Landmaschine, bereitzustellen.

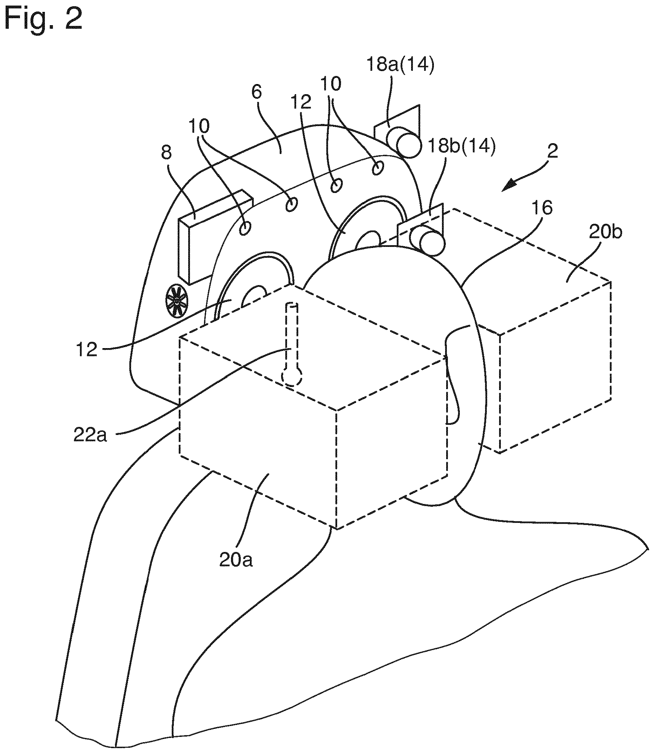

Gemäß der Erfindung ist das Geräuschreduzierungssystem 2 derart fortgebildet, dass die 3D-Kameraanordnung 14 gemeinsam mit den Mikrofonen 10, dem Schallerzeugern 12 und der Steuereinheit 8 eine räumlich abgeschlossene bauliche Einheit bilden. Dies ist in Fig. 2 gezeigt. Dort ist das Geräuschreduzierungssystem 2 vollständig in die Kopfstütze 6 des Kraftfahrzeugs integriert. Die 3D-Kameraanordnung 14, umfassend die erste Kamera 18a und die zweite Kamera 18b, befindet sich seitlich an der Kopfstütze angebracht. Die übrigen Elemente des Geräuschreduzierungssystems 2 sind bereits im Zusammenhang mit Fig. 1 beschrieben worden. Mit der 3D-Kameraanordnung 14 wird die Position des Kopfs 16 des Benutzers erfasst, so dass das virtuelle Mikrofon 22a mit der Bewegung des Kopfs 16 des Benutzers mitgeführt werden kann. Beispielhaft ist lediglich das virtuelle Mikrofon 22a für das rechte Ohr des Benutzers dargestellt. Selbstverständlich befindet sich auf der gegenüberliegenden Seite des Kopfs 16 des Benutzers ein linkes virtuelles Mikrofon, welches in der Darstellung der Figur nicht sichtbar ist. Auch dieses wird selbstverständlich bei Bewegungen des Kopfs des Benutzers mitgeführt.

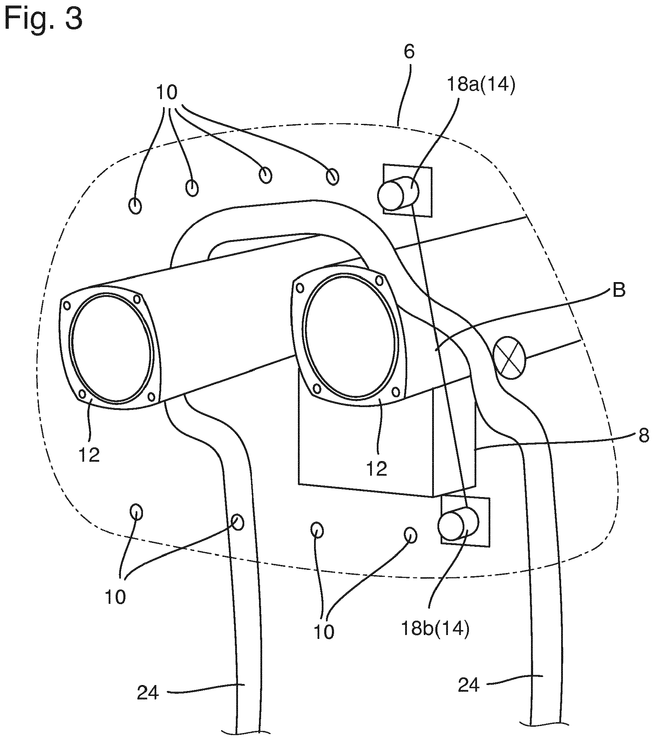

Fig. 3 zeigt das aus Fig. 2 bekannte System in einer schematisch vereinfachten perspektivischen Darstellung. Beispielhaft umfasst dieses System acht Mikrofone, welche entlang des oberen und unteren Randes der Kopfstütze 6 angeordnet sind. Die erste Kamera 18a und die zweite Kamera 18b sind so angeordnet, dass eine zwischen den Kameras verlaufende Stereobasis B von oben nach unten verläuft. Dies bedeutet, dass die erste Kamera 18a höher angeordnet ist als die zweite Kamera 18b. Die Stereobasis B ist insbesondere vertikal angeordnet, was bedeutet, dass diese zumindest näherungsweise senkrecht verläuft. Die Kameras 18a, 18b der 3D-Kameraanordnung 14 sind in einem seitlichen Abschnitt der Kopfstütze 6 angeordnet. Sie sind derart in der Kopfstütze 6 angeordnet, dass sie den Kopf 16 des Benutzers seitlich von hinten erfassen können.

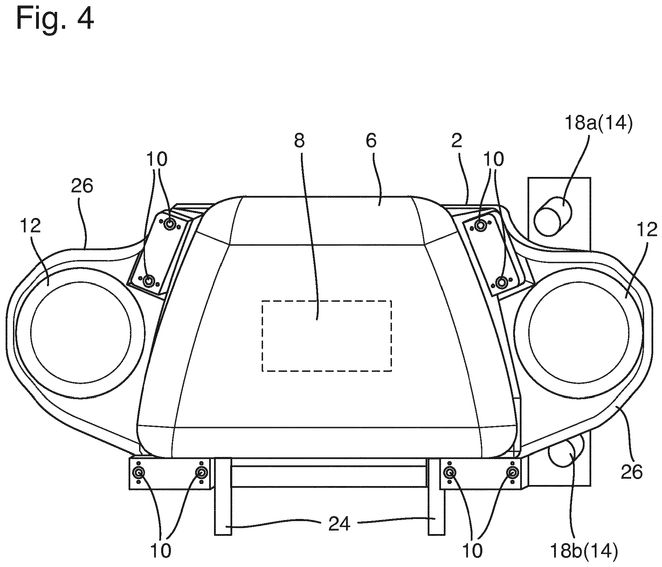

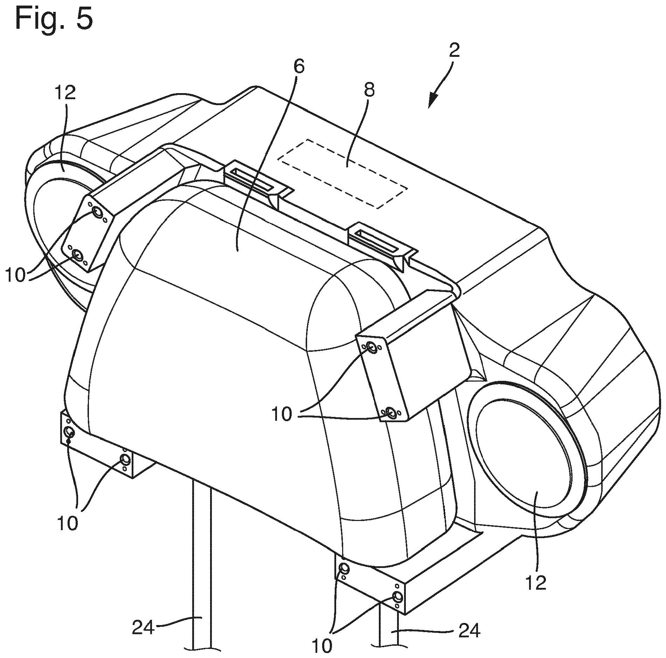

Fig. 4 und 5 zeigen ein weiteres Ausführungsbeispiel für ein Geräuschreduzierungssystem 2. Erneut sind die 3D-Kameraanordnung 14, umfassend die erste Kamera 18a und die zweite Kamera 18b, die Mikrofone 10, die Schallerzeuger 12 und die Steuereinheit 8 in einer räumlich abgeschlossenen baulichen Einheit untergebracht. Diese Einheit wird an einer Kopfstütze 6 eines Kraftfahrzeugs montiert. Hierzu sind beispielsweise nicht dargestellte Gurte vorgesehen, mit denen die Einheit an der Kopfstütze 6 befestigt werden kann. Es kann ferner vorgesehen sein, dass die Einheit an den Stützstangen 24 der Kopfstütze 6 ggf. zusätzlich befestigt wird. Die Steuereinheit 8 ist im hinteren Teil der Einheit angeordnet, in der Figur nicht sichtbar und daher in gestrichelter Linie dargestellt. Die Einheit überragt die Kopfstütze 6 in horizontaler Richtung beidseitig, in dem die Kopfstütze 6 überragenden seitlichen Abschnitten 26 sind zumindest die Schallerzeuger 12 untergebracht. Gemäß dem dargestellten Ausführungsbeispiel umfasst der eine Abschnitt 26, welcher die Kopfstütze 6 überragt, außerdem die 3D-Kameraanordnung 14.

Fig. 5 zeigt das aus Fig. 4 bekannte Geräuschreduzierungssystem 2 in einer schematisch perspektivischen Darstellung. Aus Gründen der Übersichtlichkeit ist in Fig. 5 die 3D-Kameraanordnung nicht dargestellt.

Ebenfalls sind in sämtlichen Figuren die elektrischen Verbindungen, die der Datenverbindung zwischen den einzelnen Einheiten sowie deren Stromversorgung dienen, aus Gründen der Übersichtlichkeit nicht dargestellt. Sie sind mit den üblichen technischen Mitteln realisiert.

Die Steuereinheit 8 des Geräuschreduzierungssystems 2 umfasst ein neuronales Netzwerk, welches dazu eingerichtet ist, den Bilddatenstrom, der von der 3D-Kameraanordnung 14 erzeugt wird, zu empfangen. Das neuronale Netzwerk verarbeitet den Bilddatenstrom und gibt ein Positionssignal aus, welches die Position und/oder Orientierung des Kopfs 16 des Benutzers relativ zu der Positionserfassungseinheit 14 kennzeichnet.

Gemäß einem Verfahren zur aktiven Kompensation von Störgeräuschen in einem Personenbeförderungsbereich eines Fahrzeugs, insbesondere einer Baumaschine, wird mit einem Mikrofon 10 ein Störgeräusch erfasst und das Störgeräusch von dem Mikrofon 10 in ein Störgeräusch-Signal umgewandelt. Mit einer 3D-Kameraanordnung 14, welche eine Positionserfassungseinheit bereitstellt, werden Positionsdaten erfasst und aus diesen Positionsdaten wird ein Positionssignal bestimmt. Dies erfolgt beispielsweise in der Steuereinheit 8. Das Positionssignal kennzeichnet eine Position und/oder Orientierung des Kopfs 16 eines Benutzers in dem Personenbeförderungsbereich relativ zu der Positionserfassungseinheit. Aus dem Störgeräusch-Signal und dem Positionssignal wird ein Antischall-Signal erzeugt und dieses Antischall-Signal wird von einem Schallerzeuger 12, bei dem es sich bevorzugt um einen Lautsprecher handelt, in ein Antischall-Geräusch umgewandelt. Das Antischall-Geräusch wird in einer, bevorzugt zwei, innerhalb des Personenbeförderungsbereichs liegenden Ruhezonen 20a, 20b, welche sich in unmittelbarer Nachbarschaft zu den Ohren des Benutzers befinden, mit dem Störgeräusch gegenphasig überlagert, so dass in den Ruhezonen 20a, 20b eine aktive Reduzierung des Störgeräusch bewirkt wird.

Im Rahmen der Erfindung sind Merkmale, die mit "insbesondere" oder "vorzugsweise" gekennzeichnet sind, als fakultative Merkmale zu verstehen.

### Bezugszeichenliste

- 2: Geräuschreduzierungssystem
- 4: Fahrersitz
- 6: Kopfstütze
- 8: Steuereinheit
- 10: Mikrofon
- 12: Schallerzeuger
- 14: 3D-Kameraanordnung
- 16: Kopf
- 18a: erste Kamera
- 18b: zweite Kamera
- 20a: rechte Ruhezone
- 20b: linke Ruhezone
- 22a: rechtes virtuelles Mikrofon
- 23: Referenzsensor
- 24: Stützstangen
- 25: Lärmquelle
- 26: seitlicher Abschnitt
- B: Stereobasis

## Patentansprüche

1. Geräuschreduzierungssystem (2) zur aktiven Kompensation von Störgeräuschen in einem Personenbeförderungsbereich eines Fahrzeugs, umfassend eine Steuereinheit (8), zumindest ein Mikrofon (10) zum Erfassen eines Störgeräuschs, zumindest einen Schallerzeuger (12) zum Erzeugen eines Antischall-Geräuschs und eine Positionserfassungseinheit zum Erfassen einer Position und/oder Orientierung des Kopfs (16) eines Benutzers in dem Personenbeförderungsbereich, wobei die Steuereinheit (8)
- eingangsseitig mit dem Mikrofon (10) gekoppelt und zum Empfang eines Störgeräusch-Signals eingerichtet ist,
- eingangsseitig mit der Positionserfassungseinheit gekoppelt, zum Empfang von Positionsdaten und zur Bestimmung eines Positionssignals aus den Positionsdaten eingerichtet ist, wobei das Positionssignal die Position und/oder Orientierung des Kopfs (16) des Benutzers relativ zu der Positionserfassungseinheit kennzeichnet,
- dazu eingerichtet ist, aus dem Störgeräusch-Signal und dem Positionssignal ein Antischall-Signal zu erzeugen,
- ausgangsseitig mit dem Schallerzeuger (12) gekoppelt und zum Bereitstellen des Antischall-Signals eingerichtet ist,
wobei der Schallerzeuger (12) dazu eingerichtet ist, aus dem Antischall-Signal ein Antischall-Geräusch zu erzeugen, so dass durch Überlagerung des zu dem Störgeräusch gegenphasigen Antischall-Geräuschs in einer innerhalb des Personenbeförderungsbereichs liegenden Ruhezone (20a, 20b) eine aktive Reduzierung des Störgeräuschs bewirkt werden kann, wobei die Positionserfassungseinheit eine 3D-Kameraanordnung (14) ist, und die 3D-Kameraanordnung zumindest eine erste und eine zweite Kamera (18a, 18b) umfasst, **dadurch gekennzeichnet, dass** die 3D-Kameraanordnung (14) gemeinsam mit dem zumindest einen Mikrofon (10), dem zumindest einen Schallerzeuger (12) und der Steuereinheit (8) eine räumlich abgeschlossene bauliche Einheit bildet, wobei eine Stereobasis (B) zwischen der ersten und der zweiten Kamera (18a, 18b) von oben nach unten verläuft.

2. Geräuschreduzierungssystem (2) nach Anspruch 1, wobei die Einheit eine Kopfstütze (6) eines Kraftfahrzeugs ist.

3. Geräuschreduzierungssystem (2) nach Anspruch 1, wobei die Einheit Befestigungsmittel umfasst, so dass die Einheit an eine Kopfstütze (6) eines Kraftfahrzeugs montierbar ist.

4. Geräuschreduzierungssystem (2) nach Anspruch 3, wobei die Einheit die Kopfstütze (6) in horizontaler Richtung beidseitig überragt oder die Kopfstütze (6) in vertikaler Richtung überragt und in den die Kopfstütze (6) überragenden Abschnitten (26) zumindest die 3D-Kameraanordnung (14) angeordnet ist.

5. Geräuschreduzierungssystem (2) nach einem der vorhergehenden Ansprüche, wobei die Stereobasis (B) zwischen der ersten und der zweiten Kamera (18a, 18b) vertikal orientiert ist.

6. Geräuschreduzierungssystem (2) nach einem der vorhergehenden Ansprüche, wobei mehrere Mikrofone (10) zum Erfassen des Störgeräuschs umfasst sind und wobei insbesondere vier Mikrofone pro Ruhezone (20a, 20b) umfasst sind.

7. Geräuschreduzierungssystem (2) nach einem der vorhergehenden Ansprüche, wobei die Steuereinheit (8) ein neuronales Netzwerk umfasst, welches dazu eingerichtet ist, einen Bilddatenstrom der 3D-Kameraanordnung (14) als Positionsdaten zu empfangen und das Positionssignal, welches die Position und/oder Orientierung des Kopfs (16) des Benutzers relativ zu der Positionserfassungseinheit kennzeichnet, zu bestimmen und auszugeben.

8. Geräuschreduzierungssystem (2) nach Anspruch 7, wobei die Steuereinheit ein FPGA umfasst und das neuronale Netzwerk in dem FPGA implementiert ist.

9. Verfahren zur aktiven Kompensation von Störgeräuschen in einem Personenbeförderungsbereich eines Fahrzeugs, bei dem mit zumindest einem Mikrofon (10) ein Störgeräusch erfasst und das Störgeräusch von dem Mikrofon (10) in ein Störgeräusch-Signal umgewandelt wird, mit einer Positionserfassungseinheit Positionsdaten erfasst und aus den Positionsdaten ein Positionssignal bestimmt wird, welches eine Position und/oder Orientierung des Kopfs (16) eines Benutzers in dem Personenbeförderungsbereich relativ zu der Positionserfassungseinheit kennzeichnet, aus dem Störgeräusch-Signal und dem Positionssignal ein Antischall-Signal erzeugt wird, mit einem Schallerzeuger (12) aus dem Antischall-Signal ein Antischall-Geräusch erzeugt wird und das Antischall-Geräusch in einer innerhalb des Personenbeförderungsbereichs liegenden Ruhezone (20a, 20b) mit dem Störgeräusch gegenphasig überlagert wird, so dass in der Ruhezone (20a, 20b) eine aktive Reduzierung des Störgeräuschs bewirkt wird, wobei die Positionserfassungseinheit eine 3D-Kameraanordnung (14) ist und einen 3D-Bilddatenstrom erzeugt wird, **dadurch gekennzeichnet, dass** der 3D-Bilddatenstrom in ein neuronales Netz eingespeist wird und das neuronale Netz aus dem 3D-Bilddatenstrom das Positionssignal, welches die Position und/oder Orientierung des Kopfs (16) des Benutzers relativ zu der Positionserfassungseinheit kennzeichnet, erzeugt und ausgibt.

## Claims

1. A noise reduction system (2) for actively compensating background noise in a passenger transport area of a vehicle, comprising a control unit (8), at least one microphone (10) for detecting a background noise, at least one sound generator (12) for generating antinoise and a position detection unit for detecting a position and/or orientation of the head (16) of a user in the passenger transport area, wherein the control unit (8)
- is coupled to the microphone (10) on the input side and is configured to receive a background noise signal,
- is coupled to the position detection unit on the input side, is configured to receive position data and to determine a position signal from the position data, the position signal indicating the position and/or orientation of the head (16) of the user relative to the position detection unit,
- is configured to generate an antinoise signal from the background noise signal and the position signal,
- is coupled to the sound generator (12) on the output side and is configured to provide the antinoise signal,
wherein the sound generator (12) is configured to generate antinoise from the antinoise signal such that, by superposition of the antinoise in a quiet zone (20a, 20b) within the passenger transport area, which antinoise in phase opposition with the background noise, active reduction of the background noise can be achieved, wherein the position detection unit is a 3D camera arrangement (14) and the camera arrangement comprises at least one first and one second camera (18a, 18b), **characterized in that** the 3D camera arrangement (14) forms a spatially enclosed structural unit together with the at least one microphone (10), the at least one sound generator (12) and the control unit (8), wherein a stereo base (B) between the first and the second camera (18a, 18b) is projecting downwards.

2. The noise reduction system (2) according to claim 1, wherein the unit is a headrest (6) of a motor vehicle.

3. The noise reduction system (2) according to claim 1, wherein the unit comprises fastening means such that the unit can be mounted on a headrest (6) of a motor vehicle.

4. The noise reduction system (2) according to claim 3, wherein the unit projects beyond the headrest (6) on both sides in a horizontal direction or projects beyond the headrest (6) in a vertical direction and at least the 3D camera arrangement (14) is arranged in the portions (26) projecting beyond the headrest (6).

5. The noise reduction system (2) according to any one of the preceding claims, wherein the stereo base (B) is oriented vertically between the first and the second camera (18a, 18b).

6. The noise reduction system (2) according to any one of the preceding claims, wherein a plurality of microphones (10) is provided for detecting the background noise and wherein four microphones per quiet zone (20a, 20b) in particular are provided.

7. The noise reduction system (2) according to any one of the preceding claims, wherein the control unit (8) comprises a neural network which is configured to receive an image data stream from the 3D camera arrangement (14) as position data and to determine and output the position signal, which indicates the position and/or orientation of the head (16) of the user relative to the position detection unit.

8. The noise reduction system (2) according to claim 7, wherein the control unit comprises an FPGA and the neural network is implemented in the FPGA.

9. A method for actively compensating background noise in a passenger transport area of a vehicle, in which method a background noise is detected by at least one microphone (10) and the background noise is converted into a background noise signal by the microphone (10), position data is detected by a position detection unit and, from the position data, a position signal is determined which indicates a position and/or orientation of the head (16) of a user in the passenger transport area relative to the position detection unit, an antinoise signal is generated from the background noise signal and the position signal, antinoise is generated from the antinoise signal by a sound generator (12), and the antinoise is superimposed with the background noise so as to be in phase opposition therewith in a quiet zone (20a, 20b) within the passenger transport area such that active reduction of the background noise is achieved in the quiet zone (20a, 20b), wherein the position detection unit is a 3D camera arrangement (14) and a 3D image data stream is generated, **characterized in that** the 3D image data stream is fed into a neural network and the neural network generates the position signal from the 3D data stream and outputs said position signal, which indicates the position and/or orientation of the head (16) of the user relative to the position detection unit.

## Revendications

1. Système (2) de réduction de bruit pour la compensation active de bruits parasites dans une zone de transport de personnes d'un véhicule, comprenant une unité de commande (8), au moins un microphone (10) pour la détection d'un bruit parasite, au moins un générateur de son (12) pour la production d'un bruit anti-bruit et une unité de détection de position pour la détection d'une position et/ou d'une orientation de la tête (16) d'un utilisateur dans la zone de transport de personnes, dans lequel l'unité de commande (8)
- est couplée côté entrée au microphone (10) et est conçue pour recevoir un signal de bruit parasite,
- est couplée côté entrée à l'unité de détection de position, est agencée pour recevoir des données de position et pour déterminer un signal de position à partir des données de position, le signal de position caractérisant la position et/ou l'orientation de la tête (16) de l'utilisateur par rapport à l'unité de détection de position,
- est conçue de façon à générer un signal anti-bruit à partir du signal de bruit parasite et du signal de position,
- est couplée côté sortie au générateur de son (12) et est conçue de façon à fournir le signal anti-bruit,
le générateur de son (12) étant conçu pour générer un bruit anti-bruit à partir du signal anti-bruit, de sorte que la superposition du bruit anti-bruit en opposition de phase avec le bruit parasite dans une zone de calme (20a, 20b) située à l'intérieur de la zone de transport de personnes peut provoquer une réduction active du bruit parasite,
l'unité de détection de position étant un agencement de caméra 3D (14), et l'agencement de caméra 3D comprenant au moins une première et une deuxième caméra (18a, 18b),
**caractérisé en ce que** l'agencement de caméra 3D (14) forme avec ledit au moins un microphone (10), ledit au moins un générateur de son (12) et l'unité de commande (8) une unité de construction fermée dans l'espace, une base stéréo (B) s'étendant de haut en bas entre la première et la deuxième caméra (18a, 18b).

2. Système (2) de réduction de bruit selon la revendication 1, dans lequel l'unité est un appuie-tête (6) d'un véhicule automobile.

3. Système (2) de réduction de bruit selon la revendication 1, dans lequel l'unité comprend des moyens de fixation, de sorte que l'unité est apte à être montée sur un appuie-tête (6) d'un véhicule automobile.

4. Système (2) de réduction de bruit selon la revendication 3, dans lequel l'unité dépasse l'appui-tête (6) des deux côtés dans la direction horizontale ou dépasse l'appui-tête (6) dans la direction verticale, et au moins l'agencement de caméra 3D (14) est disposé dans les sections (26) dépassant l'appui-tête (6).

5. Système (2) de réduction de bruit selon l'une des revendications précédentes, dans lequel la base stéréo (B) est orientée verticalement entre la première et la deuxième caméra (18a, 18b).

6. Système (2) de réduction de bruit selon l'une quelconque des revendications précédentes, dans lequel plusieurs microphones (10) de détection du bruit parasite sont prévus, et dans lequel sont prévus notamment quatre microphones par zone de calme (20a, 20b).

7. Système (2) de réduction de bruit selon l'une des revendications précédentes, dans lequel l'unité de commande (8) comprend un réseau neuronal qui est adapté pour recevoir un flux de données d'image de l'agencement de caméras 3D (14) en tant que données de position et pour déterminer et émettre le signal de position qui caractérise la position et/ou l'orientation de la tête (16) de l'utilisateur par rapport à l'unité de détection de position.

8. Système (2) de réduction de bruit selon la revendication 7, dans lequel l'unité de commande comprend un FPGA et le réseau neuronal est mis en oeuvre dans le FPGA.

9. Procédé de compensation active de bruits parasites dans une zone de transport de personnes d'un véhicule, dans lequel un bruit parasite est détecté avec au moins un microphone (10) et le bruit parasite est converti par le microphone (10) en un signal de bruit parasite, des données de position sont détectées au moyen d'une unité de détection de position et un signal de position est déterminé à partir des données de position, lequel signal de position caractérise une position et/ou une orientation de la tête (16) d'un utilisateur dans la zone de transport de personnes par rapport à l'unité de détection de position, un signal anti-bruit est produit à partir du signal de bruit parasite et du signal de position, un bruit anti-bruit est généré à partir du signal anti-bruit au moyen d'un générateur de son (12), et le bruit anti-bruit est superposé en opposition de phase avec le bruit parasite dans une zone de repos (20a, 20b) située à l'intérieur de la zone de transport de personnes, de sorte qu'une réduction active du bruit parasite est réalisée dans la zone de calme (20a, 20b), l'unité de détection de position étant un agencement de caméras 3D (14) et un flux de données d'image 3D étant généré, **caractérisé en ce que** le flux de données d'image 3D est injecté dans un réseau neuronal et le réseau neuronal génère et délivre à partir du flux de données d'image 3D le signal de position, lequel signal de position caractérise la position et/ou l'orientation de la tête (16) de l'utilisateur par rapport à l'unité de détection de position.
